# EUROPÄISCHE PATENTSCHRIFT

(11) **EP 4 151 077 B1**
(45) Veröffentlichungstag und Bekanntmachung des Hinweises auf die Patenterteilung: **07.08.2024**
(21) Anmeldenummer: 22180925.4
(22) Anmeldetag: 24.06.2022
(51) Int. Cl.: A01F 15/08

(54) **GETRIEBEANORDNUNG ZUM ANTREIBEN EINES PRESSKOLBENS EINER QUADERBALLENPRESSE**
TRANSMISSION ARRANGEMENT FOR DRIVING A PISTON OF A BALING PRESS
AGENCEMENT D'ENGRENAGE PERMETTANT D'ENTRAÎNER UN PISTON DE PRESSE D'UNE PRESSE À BALLES PARALLÉLÉPIPÈDES

(30) Priorität: 15.09.2021 DE 102021123867
(43) Veröffentlichungstag der Anmeldung: 22.03.2023
(73) Patentinhaber: Usines CLAAS France S.A.S, 57140 St. Rémy / Woippy (FR)
(72) Erfinder: Scharf, Thorsten, 66693 Mettlach (DE); Schulte, Michael, 33129 Delbrück (DE); Walter, Thierry, 57050 Longeville-lès-Metz (FR); Gaucher, Emile, 52170 CHEVILLON (FR)
(74) Vertreter: CLAAS Gruppe

(56) Entgegenhaltungen:
- EP-A1- 0 819 375
- EP-A1- 2 995 192
- EP-A1- 3 453 250
- EP-A1- 3 527 064
- WO-A1-2014/170318

## Beschreibung

Die vorliegende Erfindung betrifft eine Getriebeanordnung zum Antreiben eines in einem Presskanal einer Quaderballenpresse zwischen Endlagen beweglich angeordneten Presskolbens gemäß dem Oberbegriff des unabhängigen Patentanspruchs 1 sowie eine Quaderballenpresse mit einem Antriebsstrang, der eine solche Getriebeanordnung umfasst, gemäß dem Oberbegriff des Patentanspruchs 15.

Quaderballenpressen werden in der Landwirtschaft dazu eingesetzt beispielsweise im Schwad abgelegtes halmartiges Erntegut wie Stroh, Heu, Gras oder dergleichen aufzunehmen, weiter zu zerkleinern und zu quaderförmigen Ballen zu verdichten bzw. zu pressen. Hierzu verfügen die Quaderballenpressen über verschiedene Arbeitsaggregate, die der erforderlichen Förderung und/oder Weiterverarbeitung des Ernteguts dienen. Derartige Arbeitsaggregate sind beispielsweise ein Schneidrotor zum Zerkleinern des aufgesammelten Ernteguts, ein Raffer zum Vorverdichten und Zuführen des vom Schneidrotor zerkleinerten Ernteguts in einen Presskanal der Quaderballenpresse, ein Presskolben, der in dem Presskanal beweglich angeordnet ist und das in dem Presskanal befindliche und vorverdichtete Erntegut zu einem Quaderballen presst, sowie ein Knoter, der den gepressten Ballen bindet. Diese Arbeitsaggregate stehen üblicherweise mit einem zentralen Antriebsstrang der Quaderballenpresse in Antriebsverbindung, der im Betrieb der Quaderballenpresse mit einer Zapfwelle einer landwirtschaftlichen Arbeitsmaschine, insbesondere eines Traktors, verbunden ist.

Derartige Quaderballenpressen umfassen herkömmlicher Weise ein sogenanntes Schwungrad, das als Dämpfer und Energiespeicher zwischen einem die Antriebsleistung der Quaderballenpresse bereitstellenden Antriebsaggregat der landwirtschaftlichen Arbeitsmaschine und den Arbeitsaggregaten der Quaderballenpresse dient. Gegenwärtig wird die Entwicklung immer leistungsfähigerer und größerer Quaderballenpressen angestrebt, die ein in den Presskanal überführtes und vorverdichtetes Erntegut mit einem sehr hohen Pressdruck zu einem Quaderballen verdichten. Diese Bestrebungen führen dazu, dass immer höhere Antriebsleistungen mittels des Antriebsstrangs der Quaderballenpresse dem Presskolben zugeführt werden müssen, was wiederum dazu führt, dass immer größere und schwere Schwungräder verbaut werden müssen, um die erforderlichen Antriebsleistungen überhaupt bereitstellen und etwaige Belastungen auf den Antriebsstrang der Quaderballenpresse im Betrieb reduzieren zu können.

Die Verwendung von größeren und schweren Schwungrädern führt jedoch dazu, dass sich das Gewicht der Quaderballenpresse erhöht und bereits eine sehr hohe Antriebsleistung benötigt wird, um das Schwungrad überhaupt aus dem Stillstand beschleunigen zu können. Gegenwärtig sind solche Schwungräder auf einer Antriebswelle der Quaderballenpresse angeordent, die oft als Kardanwelle ausgestaltet ist und mit einem Drehmomenteneingangsanschluss, an dem die Antriebsleistung des Antriebsaggregats der landwirtschaftlichen Arbeitsmaschine mittels einer Zapfwelle bereitgestellt wird, verbunden ist. Die das Schwungrad tragende Antriebswelle ist mechanisch mit den Arbeitsaggregaten der Quaderballenpresse verbunden. Bei einer Inbetriebnahme der Quaderballenpresse muss demnach das Schwungrad immer gemeinsam mit einem Großteil der Antriebsstrangkomponenten und den an den Antriebsstrang angeschlossenen Arbeitsaggregaten der Quaderballenpresse aus dem Stillstand beschleunigt werden. Bei einigen landwirtschaftlichen Arbeitsmaschine führt dies aufgrund der hohen Trägheit dazu, dass es bei einer Inbetriebnahme der Quaderballenpresse zu einem unerwünschten Abwürgen des Antriebsaggregats der landwirtschaftlichen Arbeitsmaschine kommt und eine Inbetriebnahme der Quaderballenpresse nicht oder nur schwer möglich ist.

Die WO 2014/170318 A1 schlägt zur Lösung dieser Problematik eine Quaderballenpresse mit einer auf einer Kardanwelle zwischen einem Drehmomenteneingangsanschluss und einem Schwungrad angeordneten Übertragungseinrichtung vor, die zwischen einem Startzustand und einem Betriebszustand schaltbar ist. Im Betriebszustand überträgt die Übertragungseinrichtung eine Drehbewegung einer Zapfwelle einer landwirtschaftlichen Arbeitsmaschine vollständig auf das Schwungrad, so dass die Übertragung vergleichbar mit einer herkömmlichen Achse ist. Im Startzustand überträgt die Übertragungseinrichtung die Drehbewegung der Zapfwelle hingegen nur teilweise auf das Schwungrad. Dadurch kann die Zapfwelle eine höhere Drehzahl haben als das Schwungrad. Die Übertragungseinrichtung ist als Planetengetriebe oder als Reibkupplung ausgebildet. Aufgrund der Übertragungseinrichtung kann ein Schwungrad in der Quaderballenpresse eingesetzt werden, das zu schwer und/oder zu groß ist, um über eine direkte Verbindung in Betrieb genommen zu werden.

Nachteilig bei dieser aus dem Stand der Technik bekannten Lösung ist, dass die Verwendung eines zusätzlichen Übertragungsmittels die Komplexität des Antriebsstrangs und damit einhergehend die Kosten der Quaderballenpresse erhöht, da eine zusätzliche Baugruppe dem Schwungrad vorgeschaltet werden muss. Zudem wird durch die Verwendung der Übertragungseinrichtung das Gewicht des Antriebsstrangs und somit das Gewicht der Quaderballenpresse gesteigert, was insbesondere hinsichtlich einer Effizienz der Quaderballenpresse bzw. eines landwirtschaftlichen Zugs, bestehend aus landwirtschaftlicher Arbeitsmaschine und Quaderballenpresse, im Betrieb und der Bodenbelastung als nachteilig anzusehen ist.

Ferner muss, trotz der Verwendung einer dem Schwungrad vorgeschalteten Übertragungseinrichtung, das Schwungrad gemeinsam mit den nachgeschalteten Antriebsstrangkomponenten und den an den Antriebsstrang angeschlossenen Arbeitsaggregaten beschleunigt werden, so dass immer noch zumindest ein gewisses Restrisiko im Hinblick auf ein Abwürgen des Antriebsaggregats der landwirtschaftlichen Arbeitsmaschine bei einer Inbetriebnahme der Quaderballenpresse besteht. Zudem ist es nach wie vor notwendig ein extrem großes und schweres Schwungrad zu verwenden, um die Antriebsleistung von leistungsfähigeren und größeren Quaderballenpressen, insbesondere die zum Betrieb des Presskolbens erforderliche Antriebsleistung solcher Quaderballenpressen, bereitstellen zu können.

Das Dokument EP 2 995 192 A1 offenbart eine Getriebeanordnung nach dem Oberbegriff des Anspruchs 1.

Ausgehend von dem vorstehend genannten Stand der Technik ist es demnach die Aufgabe der vorliegenden Erfindung, eine Getriebeanordnung zum Antreiben eines in einem Presskanal einer Quaderballenpresse zwischen Endlagen beweglich angeordneten Presskolbens anzugeben, die es erlaubt, ein Schwungrad losgelöst von dem Presskolben aus dem Stillstand zu beschleunigen, gleichzeitig stets die im Betrieb erforderliche hohe Antriebsleistung am Presskolben bereitzustellen und das Gewicht des Antriebsstrangs zu reduzieren.

Diese Aufgabe wird erfindungsgemäß durch die Merkmale des unabhängigen Patentanspruchs 1 gelöst, wobei vorteilhafte Weiterbildungen der erfindungsgemäßen Getriebeanordnung Gegenstand der entsprechenden abhängigen Patentansprüche 2 bis 14 sind.

Demnach betrifft die vorliegende Erfindung eine Getriebeanordnung zum Antreiben eines in einem Presskanal einer Quaderballenpresse zwischen Endlagen beweglich angeordneten Presskolbens. Die Getriebeanordnung umfasst zumindest ein von einer Zapfwelle einer landwirtschaftlichen Arbeitsmaschine, insbesondere eines Traktors, mittelbar antreibbares Seitengetriebe und zumindest ein dem zumindest einen Seitengetriebe nachgeschaltetes Untersetzungsgetriebe. Das zumindest eine Untersetzungsgetriebe ist abtriebsseitig mit einer Kurbelwelle, auf der der Presskolben gelagert ist, verbindbar. Die Getriebeanordnung zeichnet sich insbesondere dadurch aus, dass dem zumindest einen Seitengetriebe und dem zumindest einen Untersetzungsgetriebe zumindest ein Schwungrad und dem zumindest einen Schwungrad und dem zumindest einen Untersetzungsgetriebe zumindest eine schaltbare Kupplungseinrichtung zwischengeschaltet ist.

Durch die Anordnung zumindest eines Schwungrads zwischen dem zumindest einen Seitengetriebe und dem zumindest einen Untersetzungsgetriebe in Kombination mit einer dem zumindest einen Schwungrad nachgeschalteten und dem zumindest einen Untersetzungsgetriebe vorgeschalteten schaltbaren Kupplungseinrichtung ist es möglich, das Schwungrad bei einer Inbetriebnahme der Quaderballenpresse zunächst aus dem Stillstand zu beschleunigen und anschließend erst den Presskolben und das dem Presskolben zugeordnete zumindest eine Untersetzungsgetriebe zuzuschalten. Hierdurch wird eine auf das Antriebsaggregat der landwirtschaftlichen Arbeitsmaschine durch die Trägheit der Antriebsstrangkomponenten wirkende Last in erheblichem Maße reduziert, da lediglich das zumindest eine Schwungrad und die diesem vorgeschalteten Antriebsstrangkomponenten aus dem Stillstand beschleunigt werden müssen, der Presskolben sowie das ihm zugeordnete zumindest eine Untersetzungsgetriebe jedoch noch nicht angetrieben werden müssen. Die Wahrscheinlichkeit eines Abwürgens des Antriebsaggregats der landwirtschaftlichen Arbeitsmaschine kann demnach gesenkt werden, ohne dass eine Kupplungseinrichtung dem Schwungrad vorgeschaltet werden muss.

Ferner kann durch die dem zumindest einen Seitengetriebe nachgeschaltete Anordnung des Schwungrads, diese wesentlich kleiner dimensioniert werden, so dass die durch das Schwungrad erzeugte Trägheit verringert wird. Auch dies sorgt dafür, dass die auf das Antriebsaggregat der landwirtschaftlichen Arbeitsmaschine wirkende Last bei einer Inbetriebnahme der Quaderballenpresse weiter reduziert werden kann. Das zumindest eine Seitengetriebe wird mittels einer Abtriebswelle einer vorgeschalteten Leistungsverzweigung angetrieben, die wiederum mittels einer weiteren Antriebswelle an den Drehmomenteneingangsanschluss angeschlossen ist.

Durch die erfindungsgemäße Getriebeanordnung wird demnach die Wahrscheinlichkeit eines Abwürgens des Antriebsaggregats der landwirtschaftlichen Arbeitsmaschine reduziert, unabhängig davon, welche Antriebsleistung mittels des Antriebsaggregats überhaupt bereitgestellt werden kann. Gleichzeitig wird das Gewicht des gesamten Antriebsstrangs und die Komplexität des Aufbaus des Antriebsstrangs in erheblichem Maße reduziert, was in einer erhöhten Effizienz und Zuverlässigkeit der Quaderballenpresse resultiert. Ungeachtet der zuvor genannten Vorteile wird mittels der Getriebeanordnung, unabhängig vom konkreten Leistungsbedarf des Presskolbens, stets die erforderliche Antriebsleistung für den Betrieb des Presskolbens bereitgestellt.

Gemäß einer vorteilhaften Weiterbildung der Erfindung ist vorgesehen, dass die zumindest eine schaltbare Kupplungseinrichtung unmittelbar zwischen dem zumindest einen Schwungrad und einem Getriebeeingang des zumindest einen Untersetzungsgetriebes angeordnet ist.

Hierdurch wird ein kurzer Weg zur Leistungsübertragung an den Presskolben geschaffen, da zwischen Presskolben und Schwungrad lediglich die zumindest eine schaltbare Kupplungseinrichtung und das zumindest eine Untersetzungsgetriebe angeordnet sind. Die unter Zuhilfenahme des Schwungrads erzeugte Antriebsleistung wird nahezu verlustfrei und sehr direkt an das Untersetzungsgetriebe übertragen, welches die Antriebsleistung derart wandelt, dass ein für den Betrieb des Presskolbens erforderliches hohes Drehmoment bei geringer Drehzahl erzielt wird.

Gemäß einer weiteren vorteilhaften Weiterbildung der Erfindung ist vorgesehen, dass eine Betätigung der zumindest einen schaltbaren Kupplungseinrichtung, vorzugsweise automatisch, mittels einer Steuerungseinrichtung steuerbar ist und zwar derart, dass bei einer Inbetriebnahme der Quaderballenpresse die zumindest eine schaltbare Kupplungseinrichtung in einem geöffneten Zustand, in dem das zumindest eine Schwungrad und das zumindest eine Untersetzungsgetriebe voneinander entkoppelt sind, und sobald das zumindest eine Schwungrad eine Nenndrehzahl oder eine Drehzahl, die unterhalb der Nenndrehzahl liegt, vorzugsweise eine Drehzahl, die bis zu 70 % unterhalb der Nenndrehzahl liegt, erreicht hat in einem geschlossenen Zustand, in dem das zumindest eine Schwungrad und das zumindest eine Untersetzungsgetriebe miteinander wirkverbunden sind, vorliegt.

Hierdurch ist es möglich, das Zuschalten Presskolbens und des zumindest einen Untersetzungsgetriebes vollautomatisch vorzunehmen, sobald das zumindest eine Schwungrad die Nenndrehzahl oder eine Drehzahl unterhalb der Nenndrehzahl erreicht hat. Ein Benutzer der Quaderballenpresse bzw. der landwirtschaftlichen Arbeitsmaschine muss der Steuerungseinrichtung lediglich zu erkennen geben, dass eine Inbetriebnahme der Quaderballenpresse beabsichtigt ist. Die Steuerungseinrichtung übernimmt das Schalten der zumindest einen Kupplungseinrichtung dann automatisch, so dass sichergestellt ist, dass eine Fehlbedienung oder ein zu frühes Zuschalten des Presskolbens nicht erfolgen kann.

Gemäß einer weiteren vorteilhaften Weiterbildung der Erfindung ist vorgesehen, dass die zumindest eine schaltbare Kupplungseinrichtung eine hydraulisch betätigbare Kupplungseinrichtung, vorzugsweise eine hydraulisch betätigbare Lamellenkupplung, ist.

Hierdurch kann einerseits sichergestellt werden, dass ein ausreichend hoher Anpressdruck in der zumindest einen schaltbaren Kupplungseinrichtung erzeugt wird, so dass die Antriebsleistung zuverlässig an das zumindest eine Untersetzungsgetriebe übertragen werden kann, ohne hierbei große Verluste zu erzeugen. Durch die hydraulische Betätigung kann andererseits eine variable Ansteuerung der schaltbaren Kupplungseinrichtung erzielt werden, so dass diese beispielsweise während des Schaltvorgangs zum Koppeln des Presskolbens zunächst eine gewisse Zeit schlupfend betrieben werden kann.

Insbesondere ist in diesem Zusammenhang vorstellbar, dass die Steuerungseinrichtung Schaltsignale für die Komponenten eines Hydraulikkreislaufs, beispielsweise einer Hydraulikpumpe, eines Schaltventils, etc., erzeugt, so dass ein Volumenstrom zum Betätigen der zumindest einen schaltbaren Kupplungseinrichtung variabel einstellbar ist.

Gemäß einer weiteren vorteilhaften Weiterbildung der Erfindung ist vorgesehen, dass das zumindest eine Schwungrad eine Komponente eines Abtriebs des zumindest einen Seitengetriebes ausbildet.

Das zumindest eine Schwungrad kann in diesem Zusammenhang integral mit dem Abtrieb des zumindest einen Seitengetriebes ausgebildet sein. Alternativ hierzu, kann das zumindest eine Schwungrad form-, kraft- und/oder stoffschlüssig mit dem Abtrieb des zumindest einen Seitengetriebes verbunden sein.

Auch diese Ausgestaltung sorgt einerseits für einen sehr direkten Antrieb des zumindest eines Schwungrads und andererseits für einen kompakten Aufbau der Getriebeanordnung, da der Bauraum des Abtriebs des zumindest einen Seitengetriebes gleichzeitig für das zumindest eine Schwungrad genutzt werden kann.

Gemäß einer weiteren vorteilhaften Weiterbildung der Erfindung ist vorgesehen, dass das der Abtrieb des zumindest einen Seitengetriebes drehbeweglich auf einem Gehäuse des zumindest einen Untersetzungsgetriebes gelagert ist.

Auch hierdurch wird ein kompakter Bauraum der Getriebeanordnung erheblich begünstigt, da ein für die Anordnung des zumindest einen Untersetzungsgetriebes erforderlicher Bauraum gleichzeitig für die Anordnung des Abtriebs des zumindest einen Seitengetriebes, des zumindest einen Schwungrads und auch der zumindest einen schaltbaren Kupplungseinrichtung genutzt werden kann. Es kann auf zusätzliche Bauteile, wie Wellen und Lagerungsbauteile hierfür, zur Verbindung der einzelnen zuvor genannten Komponenten miteinander verzichtet werden, was eine Gewichtsreduktion des Antriebsstrangs weiter begünstigt. Der durch die kompakte Anordnung aller zuvor genannten Komponenten der Getriebeanordnung eingesparte Bauraum kann für die Anordnung und den Antrieb anderer Komponenten und/oder Arbeitsaggregate der Quaderballenpresse gewinnbringend genutzt werden.

Gemäß einer weiteren vorteilhaften Weiterbildung der Erfindung ist vorgesehen, dass das zumindest eine Seitengetriebe ein Zugmittelgetriebe, vorzugsweise ein Keilriemengetriebe, ist.

Die Verwendung zumindest eines Zugmittelgetriebes erlaubt es besonders vorteilhaft mögliche Verwindungen im Antriebsstrang auszugleichen, die aus einer durch den Presskolben wirkenden Last auf den Antriebsstrang resultieren. Gleichzeitig kann eine mittels der Leistungsverzweigung dem zumindest einen Zugmittelgetriebe bereitgestellte Antriebsleistung bereits im Hinblick auf die Anordnung und die konkrete Ausgestaltung des zumindest einen Schwungrads und den Presskolben (vor-)gewandelt werden, wobei eine räumliche Distanz zwischen Leistungsverzweigung und dem Presskolbenantrieb besonders unkompliziert überbrückt werden kann.

Gemäß einer weiteren vorteilhaften Weiterbildung der Erfindung ist vorgesehen, dass das zumindest eine Untersetzungsgetriebe ein mehrstufiges Getriebe ist, wobei ein Übersetzungsverhältnis in jeder Getriebestufe i > 1 beträgt.

Die mehrstufige Ausgestaltung des zumindest einen Untersetzungsgetriebes mit einem Übersetzungsverhältnis von i > 1 in jeder Stufe dient dazu, die mittels des zumindest einen Seitengetriebes dem Untersetzungsgetriebe zugeführte Antriebsleistung auf die zum Betrieb des Presskolbens erforderliche Antriebsleistung zu übersetzen, die durch ein sehr hohes Drehmoment bei einer sehr niedrigen Drehzahl gekennzeichnet ist. Das für den Betrieb des Presskolbens erforderliche Drehmoment ist beispielsweise um circa den Faktor 40 bis 50 höher als das am Drehmomenteneingangsanschluss mittels des Antriebsaggregats bereitgestellte Drehmoment und die für den Betrieb des Presskolbens erforderliche Drehzahl beispielsweise um circa den Faktor 20 niedriger als die am Drehmomenteneingangsanschluss mittels des Antriebsaggregats bereitgestellte Drehzahl.

Gemäß einer weiteren vorteilhaften Weiterbildung der Erfindung ist vorgesehen, dass das zumindest eine Untersetzungsgetriebe ein Planetengetriebe ist.

Vorzugsweise ist das zumindest eine Untersetzungsgetriebe ein zweistufiges Planetengetriebe, wobei das zweistufige Planetengetriebe in jeder der zwei Getriebestufen zum Antrieb über ein Sonnenrad und zum Abtrieb über einen Steg, an dem Planetenräder gelagert sind, ausgebildet ist, wobei ein Steg der zweiten Stufe mit der Kurbelwelle verbindbar ist.

Die Verwendung eines zweistufigen Planetengetriebes als das zumindest eine Untersetzungsgetriebe sorgt einerseits für die zuvor beschriebene Wandlung der Antriebsleistung auf die für den Betrieb des Presskolbens erforderliche Antriebsleistung. Gleichzeitig zeichnet sich das Planetengetriebe jedoch durch einen sehr kompakten Bauraum aus und sorgt für ein reduziertes Gewicht im Vergleich zu anderen Getriebetypen, die für eine derartige Untersetzung der Antriebsleistung geeignet wären. Ein weiterer Vorteil der Verwendung eines Planetengetriebes ist darin zu sehen, dass die hohe zu übertragende Antriebsleistung nicht nur über einen Zahn erfolgt, wie es beispielsweise bei Stirnradgetrieben der Fall wäre, sondern über jeweils einen Zahn eines Planetenrads. Hierdurch wird die Belastung auf die Komponenten des Untersetzungsgetriebes in erheblichem Maße reduziert, so dass sich die Lebensdauer und Zuverlässigkeit des Untersetzungsgetriebes und der Getriebeanordnung in ihrer Gesamtheit erhöht.

Alternativ zu der Ausgestaltung als Planetengetriebe ist allerdings auch eine Ausgestaltung des zumindest einen Untersetzungsgetriebes als ein mehrstufiges Stirnradgetriebe möglich.

Gemäß einer weiteren vorteilhaften Weiterbildung der Erfindung ist vorgesehen, dass das zumindest eine Untersetzungsgetriebe eine Leistungsverzweigung zum Antrieb weiterer Arbeitsaggregate der Quaderballenpresse umfasst, wobei, vorzugsweise, die Leistungsverzweigung ein mehrstufiges Stirnradgetriebe umfasst.

Sofern das zumindest eine Untersetzungsgetriebe als zweistufiges Planetengetriebe ausgebildet ist, ist es gemäß einer weiteren vorteilhaften Weiterbildung der Erfindung vorgesehen, dass ein Getriebeeingang, insbesondere ein den Getriebeeingang ausbildendes Zahnrad, der als mehrstufiges Stirnradgetriebe ausgebildeten Leistungsverzweigung mit dem Steg der ersten Getriebestufe des als zweistufiges Planetengetriebe ausgebildeten Untersetzungsgetriebes wirkverbunden ist.

Die zuvor beschriebe Zuordnung der Leistungsverzweigung zu dem zumindest einen Untersetzungsgetriebe erlaubt einen Antrieb weiterer Arbeitsaggregate parallel zum Presskolben. Insbesondere wird hierdurch wiederum eine effektive Bauraumausnutzung der Getriebeanordnung begünstigt, da durch das zumindest eine Untersetzungsgetriebe benötigte Bauraum zumindest anteilig auch für die Leistungsabzweigung genutzt werden kann. Weiterhin kann durch die Wirkverbindung der Leistungsverzweigung mit einer bestimmten Getriebestufe des zumindest einen Untersetzungsgetriebe die Leistungsverzweigung ausgehend von einer im Hinblick auf die für einen Betrieb der weiteren Arbeitsaggregate erforderliche Antriebsleistung vorteilhaften Antriebsleistung erfolgen.

Gemäß einer weiteren vorteilhaften Weiterbildung der Erfindung ist vorgesehen, dass die Getriebeanordnung zwei Seitengetriebe, zwei Untersetzungsgetriebe, zwei Schwungräder und zwei schaltbare Kupplungseinrichtungen umfasst, wobei jeweils ein Untersetzungsgetriebe jeweils einem Seitengetriebe nachgeschaltet ist, jeweils ein Schwungrad jeweils einem Seitengetriebe und jeweils einem Untersetzungsgetriebe zwischengeschaltet ist und jeweils eine schaltbare Kupplungseinrichtung jeweils einem Schwungrad und jeweils einem Untersetzungsgetriebe zwischengeschaltet ist, wobei jedes Untersetzungsgetriebe abtriebsseitig mit der Kurbelwelle verbindbar ist.

Hierdurch wird eine Getriebeanordnung erzeugt, die insbesondere für besonders hohe Leistungen am Presskolben geeignet ist. Durch die Verwendung von jeweils zwei Baugruppen kann ein symmetrischer Antrieb der den Presskolben tragenden Kurbelwelle erzielt werden, wobei jede Seite der Getriebeanordnung eine reduzierte Belastung erfährt. Ausgehend von der Leistungsverzweigung, die den Seitengetrieben vorgeschaltet ist, kann die Antriebsleistung verteilt und anteilig über einen rechten und linken Strang der Getriebeanordnung der Kurbelwelle zugeführt werden. Dort werden die Leistungsanteile dann wieder miteinander kombiniert, so dass die für den Betrieb des Presskolbens erforderliche Antriebsleistung bereitgestellt werden kann. Auch diese Ausgestaltung zeichnet sich noch immer durch ein verhältnismäßig geringes Gewicht und eine geringe Komplexität aus. Ferner erlaubt diese Ausgestaltung durch die Verwendung zweier Schwungräder eine weitere Reduktion in der Dimensionierung eines jedes Schwungrads, was sich vorteilhaft auf die Inbetriebnahme der Quaderballenpresse, ihr Gewicht und die Effizienz im Betrieb auswirkt.

Die erfindungsgemäße Aufgabe wird ferner durch eine Quaderballenpresse mit einem Antriebsstrang, der eine solche Getriebeanordnung umfasst, gemäß dem Patentanspruch 15 gelöst

Die vorliegende Erfindung wird nachstehend anhand der in den Figuren abgebildeten Ausführungsformen näher beschrieben.

Es zeigen:
- Fig. 1:: eine schematische und exemplarische Seitenansicht einer erfindungsgemäßen Quaderballenpresse;
- Fig. 2:: eine schematische und exemplarische Darstellung eines die erfindungsgemäße Getriebeanordnung umfassenden Antriebsstrangs der erfindungsgemäßen Quaderballenpresse; und
- Fig. 3:: eine schematische und exemplarische Teilschnittansicht einer Ausführungsform der erfindungsgemäßen Getriebeanordnung.

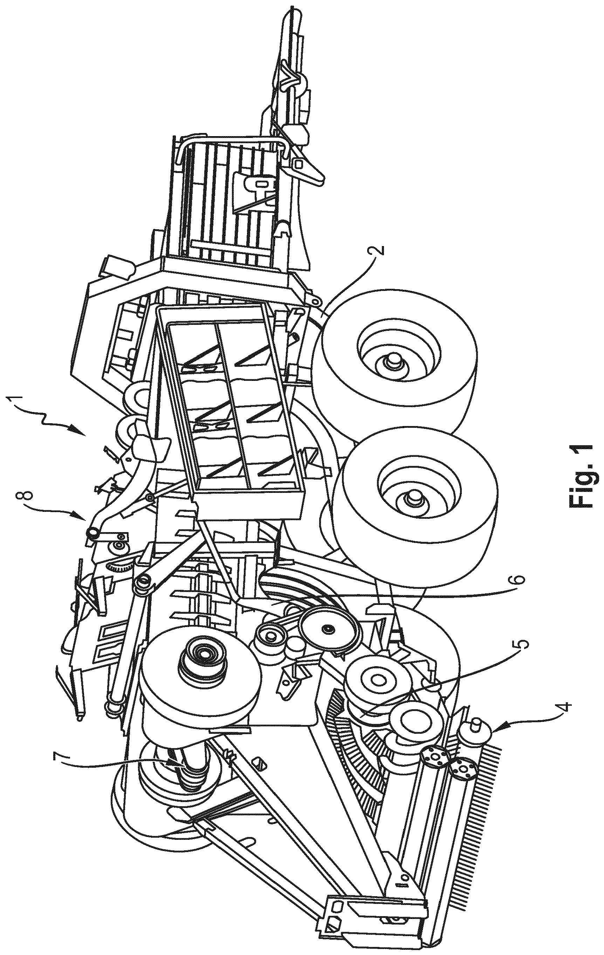

FIG. 1 zeigt eine schematische und exemplarische Darstellung einer Ausführungsform der erfindungsgemäßen Quaderballenpresse 1. Die Quaderballenpresse 1 ist mit einer in den FIGs. nicht dargestellten landwirtschaftlichen Arbeitsmaschine, insbesondere eines Traktors, koppelbar, so dass die Quaderballenpresse 1 und die landwirtschaftliche Arbeitsmaschine gemeinsam einen sogenannten landwirtschaftlichen Zug ausbilden. Die Quaderballenpresse 1 umfasst ein in FIG. 1 nicht dargestelltes Gehäuse auf, welches die an einem Fahrgestell 2 der Quaderballenpresse 1 befestigte Komponenten der Quaderballenpresse 1 umhüllend umgibt.

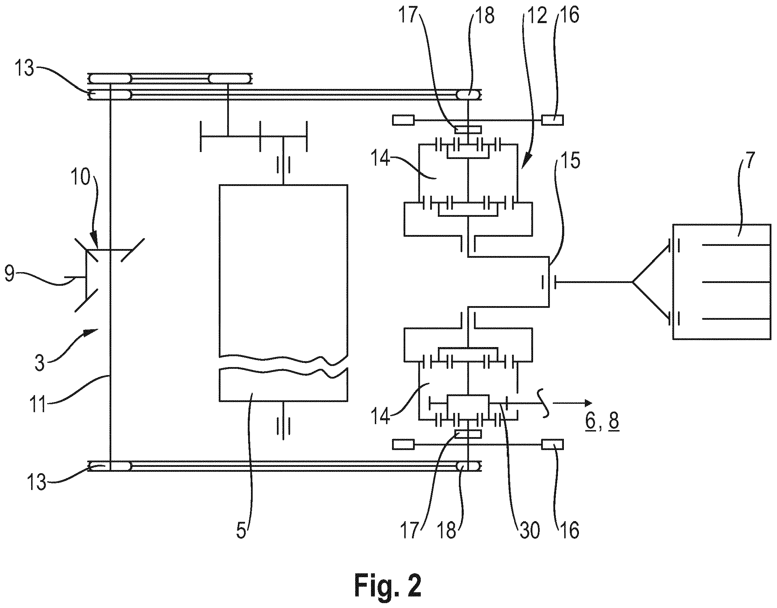

Die Quaderballenpresse 1 umfasst ferner einen in FIG. 2 näher dargestellten Antriebsstrang 3 mittels dem diverse Arbeitsaggregate der Quaderballenpresse 1 angetrieben werden. Derartige Arbeitsaggregate sind beispielsweise eine als Pick-Up bekannte Aufnahmevorrichtung 4 zur Aufnahme von im Schwad auf einer landwirtschaftlichen Fläche abgelegten Ernteguts, ein Schneidrotor 5 zum Zerkleinern des aufgenommenen Ernteguts, ein Raffer 6 zum Vorverdichten des zerkleinerten Ernteguts und Zuführen desselben in einen Presskanal der Quaderballenpresse 1, ein in dem Presskanal der Quaderballenpresse 1 zwischen Endlagen beweglich angeordneten Presskolben 7 zum Pressen des vorverdichteten Ernteguts in einen Quaderballen, sowie ein Knoter 8 zum Binden des gepressten Quaderballens.

Der Antriebsstrang 3 der Quaderballenpresse 1 wird mittels der landwirtschaftlichen Arbeitsmaschine, insbesondere des Traktors, mit einer Antriebsleistung versorgt. Hierzu umfasst die landwirtschaftliche Arbeitsmaschine heckseitig einen an sich bekannten Zapfwellenabtrieb auf. Der Antriebsstrang 3 der Quaderballenpresse 1 umfasst eine Antriebswelle 9, die wiederum einen Drehmomenteneingangsanschluss des Antriebsstrangs 3 umfasst mittels dem der Antriebsstrang 3 der Quaderballenpresse 1 mit dem Zapfwellenabtrieb der landwirtschaftlichen Arbeitsmaschine verbindbar ist.

An die Antriebswelle 9 des Antriebsstrangs 3 schließt sich eine erste Leistungsverzweigung 10 an, die als Kegelradstufe ausgebildet ist. Ein Kegelrad der als Kegelradstufe ausgebildeten ersten Leistungsverzweigung umfasst eine Abtriebswelle 11, die sich quer zur Antriebswelle 9 (d.h., quer zur Haupterstreckungsrichtung der Quaderballenpresse 1 (also quer zu einer Längsrichtung der Quaderballenpresse 1)) erstreckt, an der das andere Kegelrad der Kegelradstufe angeschlossen ist.

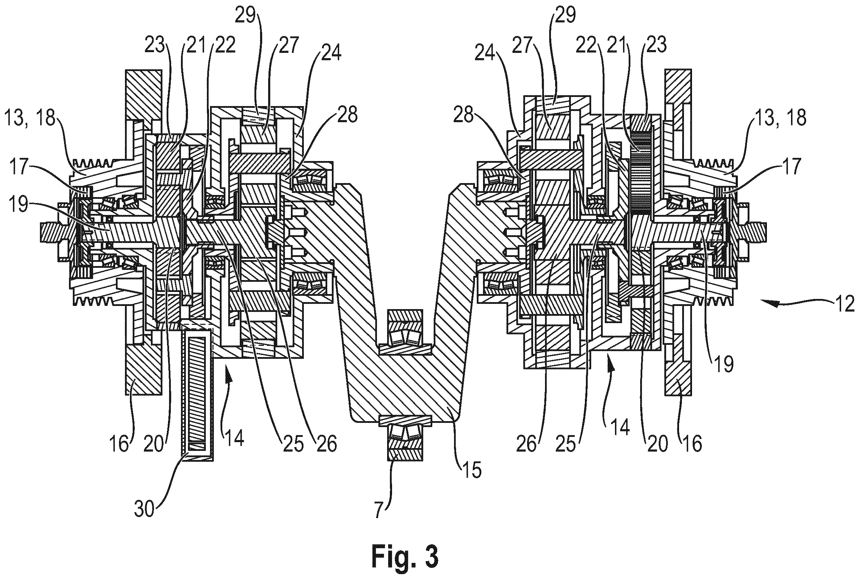

Die erfindungsgemäße Quaderballenpresse 1 bzw. der Antriebsstrang 3 der erfindungsgemäßen Quaderballenpresse 1 umfasst neben den zuvor genannten Antriebsstrangkomponenten eine Getriebeanordnung 12. Wie in den FIGs. 2 und 3 dargestellt, umfasst die Getriebeanordnung 12 zumindest ein Seitengetriebe 13, das mittelbar von einer Zapfwelle der landwirtschaftlichen Arbeitsmaschine antreibbar ist. Mittelbar bedeutet in diesem Zusammenhang, dass das zumindest eine Seitengetriebe 13 an die Leistungsverzweigung 10 angeschlossen sein kann. Wie insbesondere in FIG. 2 dargestellt, kann ein Antrieb des zumindest einen Seitengetriebes 13 auf der Abtrieswelle 11 der Leistungsverzweigung 10 angeordnet sein. Eine mittels der Leistungsverzweigung 10 dem zumindest einen Seitengetriebe 13 bereitgestellte Antriebsleistung kann mittels des zumindest einen Seitengetriebes 13 gewandelt werden, kann jedoch auch ohne Wandlung übertragen werden.

Das zumindest eine Seitengetriebe 13 ist vorzugsweise als Zugmittelgetriebe, besonders bevorzugt als Keilriemengetriebe, ausgebildet, das, wie eingangs ausgeführt, vorteilhaft im Hinblick auf den Aufbau der Getriebeanordnung 12 anzusehen ist. Das zumindest eine Seitengetriebe 13 kann jedoch ebenfalls als ein anderes Zugmittelgetriebe, beispielsweise ein Kettengetriebe, oder eine Kegelradstufe ausgebildet sein. Die Verwendung eines Zugmittelgetriebes als das zumindest eine Seitengetriebe 13 erlaubt es besonders unkompliziert eine räumliche Distanz zwischen Leistungsverzweigung 10 und dem Presskolben 7 zu überbrücken.

Dem zumindest einen Seitengetriebe 13 ist zumindest ein Untersetzungsgetriebe 14 nachgeschaltet, das dazu eingerichtet ist, die mittels des zumindest einen Seitengetriebes 13 bereitgestellte Antriebsleistung auf eine für den Betrieb des Presskolbens 7 erforderliche Antriebsleistung zu wandeln. Das zumindest eine Untersetzungsgetriebe 14 ist abtriebsseitig mit einer Kurbelwelle 15 verbindbar bzw. verbunden, auf der der Presskolben 7 gelagert ist.

Kennzeichnend ist, dass dem zumindest einen Untersetzungsgetriebe 14 und dem zumindest einen Seitengetriebe 12 zumindest ein Schwungrad 16 zwischengeschaltet ist und dass dem zumindest einen Schwungrad 16 und dem zumindest einen Untersetzungsgetriebe 14 wiederum zumindest eine schaltbare Kupplungseinrichtung 17 zwischengeschaltet ist. Vorzugsweise ist die zumindest eine schaltbare Kupplungseinrichtung 17 unmittelbar zwischen dem zumindest einen Schwungrad 16 und einem Getriebeeingang des zumindest einen Untersetzungsgetriebes 14 angeordnet.

Die Betätigung der zumindest einen schaltbaren Kupplungseinrichtung 17 ist mittels einer in den FIGs. nicht dargestellten Steuerungseinrichtung steuerbar. Die Steuerungseinrichtung kann der Quaderballenpresse 1 selbst oder aber der landwirtschaftlichen Arbeitsmaschine zugeordnet sein. Insbesondere steuert die Steuerungseinrichtung die Betätigung der zumindest einen schaltbaren Kupplungseinrichtung 17 derart, dass bei einer Inbetriebnahme der Quaderballenpresse 1 die Kupplungseinrichtung 17 in einem geöffneten Zustand vorliegt. Ein geöffneter Zustand der Kupplungseinrichtung 17 ist ein Zustand, in dem das zumindest eine Schwungrad 16 von dem zumindest einen Untersetzungsgetriebe 14 entkoppelt ist und somit keine Antriebsleistung von dem zumindest einen Schwungrad 16 bzw. dem das zumindest eine Schwungrad 16 tragenden Bauteil, vorzugsweise dem zumindest einen Seitengetriebe 13, an den Getriebeeingang des zumindest einen Untersetzungsgetriebes 14 übertragen werden kann. In diesem Schaltzustand der zumindest einen schaltbaren Kupplungseinrichtung 17 wird das zumindest eine Schwungrad 16 mittels der durch das zumindest eine Seitengetriebe 13 bereitgestellten Antriebsleistung aus dem Stillstand beschleunigt. Sobald das zumindest eine Schwungrad 16 seine Nenndrehzahl oder eine Drehzahl, die unterhalb der Nenndrehzahl liegt, vorzugsweise eine Drehzahl, die bis zu 70 % unterhalb der Nenndrehzahl liegt (der Wert 70 % unterhalb der Nenndrehzahl ist in diesem Bereich miteingeschlossen), erreicht hat, steuert die Steuerungseinrichtung die Betätigung der zumindest einen schaltbaren Kupplungseinrichtung 17 derart, dass die zumindest eine schaltbare Kupplungseinrichtung 17 in einen geschlossenen Zustand überführt wird. Ein geschlossener Zustand ist ein Zustand, in dem das zumindest eine Schwungrad 16 mit dem zumindest einen Untersetzungsgetriebe 14 gekoppelt ist und somit eine Antriebsleistung von dem zumindest einen Schwungrad 16 bzw. dem das zumindest eine Schwungrad 16 tragenden Bauteil, vorzugsweise dem zumindest einen Seitengetriebe 13, an den Getriebeeingang des zumindest einen Untersetzungsgetriebes 14 übertragen werden kann.

Gemäß einer Ausführungsform der erfindungsgemäßen Getriebeanordnung 12 ist die zumindest eine schaltbare Kupplungseinrichtung 17 als hydraulisch betätigbare bzw. schaltbare Kupplungseinrichtung 17 ausgebildet, insbesondere als hydraulisch betätigbare bzw. schaltbare Lamellenkupplung. In diesem Zusammenhang ist es vorstellbar, dass die Steuerungseinrichtung Schaltsignale für die Komponenten eines mit der zumindest einen hydraulisch betätigbaren bzw. schaltbaren Kupplungseinrichtung 17 verbundenen Hydraulikkreislaufs, beispielsweise einer Hydraulikpumpe, eines Schaltventils, etc., erzeugt, so dass ein Volumenstrom zum Betätigen der zumindest einen hydraulisch betätigbaren bzw. schaltbaren Kupplungseinrichtung 17 mittels der Steuerungssignale an die Komponenten variabel einstellbar ist.

Grundsätzlich ist es auch vorstellbar, dass die Betätigung der zumindest einen schaltbaren Kupplungseinrichtung 17 auch von einem Benutzer manuell erfolgen kann, beispielsweise über die Betätigung eines Fußpedals in einer Fahrgastzelle der landwirtschaftlichen Arbeitsmaschine.

Gemäß einer Ausführungsform der erfindungsgemäßen Getriebeanordnung 12 ist das zumindest eine Schwungrad 16 als Komponente eines Abtriebs 18 des zumindest einen Seitengetriebes 13 ausgebildet. Das zumindest eine Schwungrad 16 kann gemäß einer Ausführungsform integral mit dem Abtrieb 18 des zumindest einen Seitengetriebes 13 ausgebildet sein, so dass der Abtrieb 18 und Schwungrad 16 ein kohärentes Bauteil ausbilden. Alternativ hierzu kann das zumindest eine Schwungrad 16 kraft-, form- und/oder stoffschlüssig mit dem Abtrieb 18 des zumindest einen Seitengetriebes 13 verbunden sein.

Wie in den FIGs. 2 und 3 dargestellt, ist das zumindest eine Untersetzungsgetriebe 14 vorzugsweise als mehrstufiges Untersetzungsgetriebe 14 ausgebildet. Jede Getriebestufe des zumindest einen mehrstufigen Untersetzungsgetriebes 14 weist hierbei ein Übersetzungsverhältnis i > 1 auf.

Gemäß einer bevorzugten Ausführungsform, die in FIG. 3 abgebildet ist, ist das zumindest eine Untersetzungsgetriebe 14 als ein Planetengetriebe ausgebildet. Vorzugsweise ist das Planetengetriebe als zweistufiges Planetengetriebe ausgebildet, das eingangsseitig mittels der zumindest einen schaltbaren Kupplungseinrichtung 17 mit dem zumindest einen Schwungrad 16 bzw. den das zumindest eine Schwungrad 16 umfassenden Abtrieb 18 des zumindest einen Seitengetriebes 13 derart verbindbar bzw. verbunden ist, dass eine Antriebsleistung dem Planetengetriebe zugeführt werden kann bzw. wird. Ausgangsseitig ist das zweistufige Planetengetriebe mit der Kurbelwelle 15 verbindbar bzw. verbunden. Der Getriebeeingang des zweistufigen Planetengetriebes umfasst eine erste Getriebewelle 19, auf der ein erstes Sonnenrad 20 befestigt ist. Das erste Sonnenrad 20 kämmt mit einer Vielzahl von ersten Planetenrädern 21, vorzugsweise vier ersten Planetenrädern 21, die gemeinsam drehbeweglich an einem ersten Steg 22 gelagert sind. Die ersten Planetenräder 21 wiederum kämmen mit einem ersten Hohlrad 23, das starr mit einem Getriebegehäuse 24 verbunden ist, das wiederum mit dem Fahrgestell 2 der Quaderballen 1 oder einem anderen Bauteil der Quaderballenpresse 1 verbunden ist, so dass sich das Getriebegehäuse 24 beim Betrieb der Quaderballenpresse lediglich zusammen mit der Quaderballenpresse 1 bewegt, jedoch nicht relativ zur Quaderballenpresse 1 (Schwingungsbewegungen sind hierbei ausgenommen). Die Antriebsleistung wird somit in dem geschlossenen Zustand der zumindest einen schaltbaren Kupplungseinrichtung 17 dem ersten Sonnenrad 20 über die erste Getriebewelle 19 zugeführt und an die ersten Planetenräder 21 übertragen, die das erste Hohlrad 23 ablaufen und eine Drehbewegung auf den ersten Steg 22 übertragen. Der Abtrieb erfolgt somit in der ersten Getriebestufe des zweistufigen Planetengetriebes über den ersten Steg 22. Der erste Steg 22 der ersten Getriebestufe ist mit einer zweiten Getriebewelle 25 derart verbunden, dass die Antriebsleistung in einem geschlossenen Zustand der zumindest einen schaltbaren Kupplungseinrichtung 17 vom ersten Steg 22 auf die zweite Getriebewelle 25 übertragen wird. Auf der zweiten Getriebewelle 25 ist ein zweites Sonnenrad 26 befestigt. Das zweite Sonnenrad 26 kämmt mit einer Vielzahl von zweiten Planetenrädern 27, vorzugsweise vier zweiten Planetenrädern 27, die gemeinsam drehbeweglich an einem zweiten Steg 28 gelagert sind. Die zweiten Planetenräder 27 wiederum kämmen mit einem zweiten Hohlrad 29, das starr mit dem Getriebegehäuse 24 verbunden ist. Die Antriebsleistung wird somit in dem geschlossenen Zustand der zumindest einen schaltbaren Kupplungseinrichtung 17 ausgehend von der ersten Getriebestufe dem zweiten Sonnenrad 26 über die zweite Getriebewelle 25 zugeführt und an die zweiten Planetenräder 27 übertragen, die das zweite Hohlrad 29 ablaufen und eine Drehbewegung auf den zweiten Steg 28 übertragen. Der Abtrieb erfolgt somit in der zweiten Getriebestufe des zweistufigen Planetengetriebes über den zweiten Steg 28, der mit der Kurbelwelle 15 verbindbar bzw. verbunden ist und somit in dem geschlossenen Zustand der zumindest einen schaltbaren Kupplungseinrichtung 17 die Antriebsleistung an die Kurbelwelle 15 und den darauf gelagerten Presskolben 7 überträgt.

Alternativ zu der zuvor beschriebenen Ausgestaltung des zumindest einen Untersetzungsgetriebes 14 als zweistufiges Planetengetriebe ist auch eine Ausgestaltung als einstufiges Planetengetriebe oder als Planetengetriebe mit drei oder mehr Stufen denkbar. Eine weitere alternative Ausgestaltung des zumindest einen Untersetzungsgetriebes 14 ist ein mehrstufiges Stirnradgetriebe.

Es kann ferner vorgesehen sein, dass der Abtrieb 18 des zumindest einen Seitengetriebes 13, der das zumindest eine Schwungrad 16 umfassen kann, drehbar auf dem Getriebegehäuse 24 gelagert ist. Eine solche Ausgestaltung ist in FIG. 3 dargestellt, jedoch nicht auf eine Ausgestaltung des zumindest einen Untersetzungsgetriebes 14 als Planetengetriebe beschränkt.

Wie in den FIGs. 2 bis 3 dargestellt, kann die Getriebeanordnung 12 zwei Seitengetriebe 13, zwei Untersetzungsgetriebe 14, zwei Schwungräder 16 und zwei schaltbare Kupplungen 17 aufweisen. Wie bereits eingangs geschildert, ist die Ausgestaltung als besonders vorteilhaft in Bezug auf Quaderballenpressen 1 anzusehen, die eine besonders hohe Antriebsleistung am Presskolben 7 erfordern. Eine solche Ausgestaltung ist jedoch auch in gleichem Maße für Quaderballenpressen 1 geeignet, die eine geringere Antriebsleistung am Presskolben 7 erfordern.

Bei einer solchen Ausgestaltung der erfindungsgemäßen Getriebeanordnung 12 mit jeweils zwei Baugruppen ist jeweils ein Untersetzungsgetriebe 14 jeweils einem Seitengetriebe 13 nachgeschaltet, jeweils ein Schwungrad 16 jeweils einem Seitengetriebe 13 und jeweils einem Untersetzungsgetriebe 14 und jeweils eine schaltbare Kupplungseinrichtung 17 jeweils einem Schwungrad 16 und jeweils einem Untersetzungsgetriebe 14 zwischengeschaltet. Jedes der Untersetzungsgetriebe 14 ist abtriebsseitig mit der Kurbelwelle15 verbindbar bzw. verbunden, so dass die Kurbelwelle 15 zwischen beiden Untersetzungsgetrieben 14 angeordnet ist. Jeweils einem der Untersetzungsgetriebe 14 wird von jeweils einem der zwei Seitengetriebe 14, unter Zwischenschaltung eines Schwungrads 16 und einer schaltbaren Kupplungseinrichtung 17, über den jeweiligen Abtrieb 18 des Seitengetriebes 13 Antriebsleistung zugeführt, die dann im jeweiligen Untersetzungsgetriebe 14 gewandelt wird und an die Kurbelwelle 15, auf der der Presskolben 7 gelagert ist, übertragen.

Mit anderen Worten, ausgehend von der Leistungsverzweigung 10, die jedem der zwei Seitengetriebe 13 vorgeschaltet ist, wird die Antriebsleistung verteilt und anteilig über einen rechten und linken Strang der erfindungsgemäßen Getriebeanordnung 12 der Kurbelwelle 15 zugeführt. An der Kurbelwelle 15 werden die Leistungsanteile dann wieder miteinander kombiniert, so dass die für den Betrieb des Presskolbens 7 erforderliche Antriebsleistung bereitgestellt werden kann.

Auch wenn die FIGs. 2 bis 3 die zuvor beschriebene Ausführungsform der Getriebeanordnung 12 mit jeweils zwei Baugruppen 13, 14, 16, 17 darstellen, ist eine Ausgestaltung der erfindungsgemäßen Getriebeanordnung 12 mit nur jeweils einer solchen Baugruppe 13, 14, 16, 17 gleichermaßen möglich bzw. in Abhängigkeit der am Presskolben 7 erforderlichen Antriebsleistung wünschenswert. Die Getriebeanordnung 12 ist in einem solchen Fall nur einseitig der Kurbelwelle 15 ausgebildet, wobei das Untersetzungsgetriebe 14 abtriebsseitig mit einem Ende der Kurbelwelle 15 verbunden ist und die Kurbelwelle 15 mit ihrem anderen Ende drehbeweglich im Gehäuse der Quaderballenpresse 1 gelagert ist.

Die erfindungsgemäße Getriebeanordnung 12 kann ferner eine Leistungsverzweigung 30 umfassen, die dem zumindest einen Untersetzungsgetriebe 14 zugeordnet ist. Die Leistungsverzweigung 30 umfasst vorzugsweise ein mehrstufiges Stirnradgetriebe. Hierdurch ist es möglich parallel zum Presskolben 7 weitere Arbeitsaggregate, wie beispielsweise einen Raffer 6 und/oder einen Knoter 8, anzutreiben. Sofern das zumindest eine Untersetzungsgetriebe 14 als zweistufiges Planetengetriebe ausgebildet ist, ist die die Leistungsverzweigung 10, insbesondere ein Zahnrad des Stirnradgetriebes, mit dem ersten Steg 22 der ersten Getriebestufe wirkverbunden.

Der Antriebsstrang 3 der Quaderballenpresse 1 kann ferner ausgehend von der Leistungsverzweigung 10 bzw. der Abtriebswelle 11 der Leistungsverzweigung 10 dazu eingereicht sein, ein zumindest ein weiteres Arbeitsaggregat, beispielsweise eine Aufnahmevorrichtung 4 und/oder einen Schneidrotor 5, anzutreiben. Hierzu kann der Leistungsverzweigung 10 bzw. der Abtriebswelle 11 der Leistungsverzweigung 10 zumindest ein weiteres Seitengetriebe oder zumindest ein Winkelgetriebe nachgeschaltet sein, das die Antriebsleistung unmittelbar oder mittelbar, beispielsweise über ein oder mehrere Getriebe, an die weiteren Arbeitsaggregate 4, 5 der Quaderballenpresse 1 überträgt.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

1 Quaderballenpresse
2 Fahrgestell
3 Antriebsstrang
4 Aufnahmevorrichtung
5 Schneidrotor
6 Raffer
7 Presskolben
8 Knoter
9 Antriebswelle
10 Leistungsverzweigung (Leistungsverzweigung vor Getriebeanordnung)
11 Abtriebswelle
12 Getriebeanordnung
13 Seitengetriebe
14 Untersetzungsgetriebe
15 Kurbelwelle
16 Schwungrad
17 Schaltbare Kupplungseinrichtung
18 Abtrieb des Seitengetriebes
19 Getriebewelle der ersten Stufe des Planetengetriebes (erste Getriebewelle)
20 Sonnenrad der ersten Stufe des Planetengetriebes (erstes Sonnenrad)
21 Planetenräder der ersten Stufe des Planetengetriebes (erste Planetenräder)
22 Steg der ersten Stufe des Planetengetriebes (erster Steg)
23 Hohlrad der ersten Stufe des Planetengetriebes (erstes Hohlrad)
24 Getriebegehäuse
25 Getriebewelle der zweiten Stufe des Planetengetriebes (zweite Getriebewelle)
26 Sonnenrad der zweiten Stufe des Planetengetriebes (zweites Sonnenrad)
27 Planetenräder der zweiten Stufe des Planetengetriebes (zweite Planetenräder)
28 Steg der zweiten Stufe des Planetengetriebes (zweiter Steg)
29 Hohlrad der zweiten Stufe des Planetengetriebes (zweites Hohlrad)
30 Leistungsverzweigung (Leistungsverzweigung am Untersetzungsgetriebe)

## Patentansprüche

1. Getriebeanordnung (12) zum Antreiben eines in einem Presskanal einer Quaderballenpresse (1) zwischen Endlagen beweglich angeordneten Presskolbens (7), wobei die Getriebeanordnung (12) zumindest ein von einer Zapfwelle einer landwirtschaftlichen Arbeitsmaschine, insbesondere eines Traktors, mittelbar antreibbares Seitengetriebe (13) und zumindest ein dem zumindest einen Seitengetriebe (13) nachgeschaltetes Untersetzungsgetriebe (14) umfasst, das abtriebsseitig mit einer Kurbelwelle (15), auf der der Presskolben (7) gelagert ist, verbindbar ist,
**dadurch gekennzeichnet, dass**
dem zumindest einen Seitengetriebe (13) und dem zumindest einen Untersetzungsgetriebe (14) zumindest ein Schwungrad (16) und dem zumindest einen Schwungrad (16) und dem zumindest einen Untersetzungsgetriebe (14) zumindest eine schaltbare Kupplungseinrichtung (17) zwischengeschaltet ist.

2. Getriebeanordnung (12) nach Anspruch 1, **dadurch gekennzeichnet, dass** die zumindest eine schaltbare Kupplungseinrichtung (17) unmittelbar zwischen dem zumindest einen Schwungrad (16) und einem Getriebeeingang des zumindest einen Untersetzungsgetriebes (14) angeordnet ist.

3. Getriebeanordnung (12) nach Anspruch 1 oder 2, **dadurch gekennzeichnet, dass** eine Betätigung der zumindest einen schaltbaren Kupplungseinrichtung (17), vorzugsweise automatisch, mittels einer Steuerungseinrichtung steuerbar ist und zwar derart, dass bei einer Inbetriebnahme der Quaderballenpresse (1) die zumindest eine schaltbare Kupplungseinrichtung (17) in einem geöffneten Zustand, in dem das zumindest eine Schwungrad (16) und das zumindest eine Untersetzungsgetriebe (14) voneinander entkoppelt sind, und sobald das zumindest eine Schwungrad (16) eine Nenndrehzahl oder eine Drehzahl, die unterhalb der Nenndrehzahl liegt, vorzugsweise eine Drehzahl, die bis zu 70 % unterhalb der Nenndrehzahl liegt, erreicht hat in einem geschlossenen Zustand, in dem das zumindest eine Schwungrad (16) und das zumindest eine Untersetzungsgetriebe (14) miteinander wirkverbunden sind, vorliegt.

4. Getriebeanordnung (12) nach einen der Ansprüche 1 bis 3, **dadurch gekennzeichnet, dass** die zumindest eine schaltbare Kupplungseinrichtung (17) eine hydraulisch betätigbare Kupplungseinrichtung, vorzugsweise eine hydraulisch betätigbare Lamellenkupplung, ist.

5. Getriebeanordnung (12) nach einem der Ansprüche 1 bis 4, **dadurch gekennzeichnet, dass** das zumindest eine Schwungrad (16) eine Komponente eines Abtriebs (18) des zumindest einen Seitengetriebes (13) ausbildet.

6. Getriebeanordnung (12) nach Anspruch 5, **dadurch gekennzeichnet, dass** das zumindest eine Schwungrad (16) integral mit dem Abtrieb (18) des zumindest einen Seitengetriebes (13) ausgebildet ist oder form-, kraft- und/oder stoffschlüssig mit dem Abtrieb (18) des zumindest einen Seitengetriebes (13) verbunden ist.

7. Getriebeanordnung (12) nach Anspruch 5 oder 6, **dadurch gekennzeichnet, dass** das der Abtrieb (18) des zumindest einen Seitengetriebes (13) drehbeweglich auf einem Gehäuse (24) des zumindest einen Untersetzungsgetriebes (14) gelagert ist.

8. Getriebeanordnung (12) nach einem der Ansprüche 1 bis 7, **dadurch gekennzeichnet, dass** das zumindest eine Seitengetriebe (13) ein Zugmittelgetriebe, vorzugsweise ein Keilriemengetriebe, ist.

9. Getriebeanordnung (12) nach einem der Ansprüche 1 bis 8, **dadurch gekennzeichnet, dass** das zumindest eine Untersetzungsgetriebe (14) ein mehrstufiges Getriebe ist, wobei ein Übersetzungsverhältnis in jeder Getriebestufe i > 1 beträgt.

10. Getriebeanordnung (12) nach einem der Ansprüche 1 bis 9, **dadurch gekennzeichnet, dass** das zumindest eine Untersetzungsgetriebe (14) ein Planetengetriebe ist, wobei, vorzugsweise, das zumindest eine Untersetzungsgetriebe (14) ein zweistufiges Planetengetriebe ist, wobei das zweistufige Planetengetriebe in jeder der zwei Getriebestufen zum Antrieb über ein Sonnenrad (20, 26) und zum Abtrieb über einen Steg (22, 28), an dem Planetenräder (21, 27) gelagert sind, ausgebildet ist, wobei ein Steg (28) der zweiten Stufe mit der Kurbelwelle (15) verbindbar ist.

11. Getriebeanordnung (12) nach Anspruch 9, **dadurch gekennzeichnet, dass** das zumindest eine Untersetzungsgetriebe (14) ein mehrstufiges Stirnradgetriebe ist.

12. Getriebeanordnung (12) nach einem der Ansprüche 1 bis 11, **dadurch gekennzeichnet, dass** das zumindest eine Untersetzungsgetriebe (14) eine Leistungsverzweigung (30) zum Antrieb weiterer Arbeitsaggregate (6, 8) der Quaderballenpresse umfasst, wobei, vorzugsweise, die Leistungsverzweigung (30) ein mehrstufiges Stirnradgetriebe umfasst.

13. Getriebeanordnung (12) nach Anspruch 12 in Kombination mit Anspruch 10, **dadurch gekennzeichnet, dass** ein Getriebeeingang, insbesondere ein den Getriebeeingang ausbildendes Zahnrad, der als mehrstufiges Stirnradgetriebe ausgebildeten Leistungsverzweigung (30) mit dem Steg (22) der ersten Getriebestufe des als zweistufiges Planetengetriebe ausgebildeten Untersetzungsgetriebes (14) wirkverbunden ist.

14. Getriebeanordnung (12) nach einem der Ansprüche 1 bis 13, **dadurch gekennzeichnet, dass** die Getriebeanordnung (12) zwei Seitengetriebe (13), zwei Untersetzungsgetriebe (14), zwei Schwungräder (16) und zwei schaltbare Kupplungseinrichtungen (17) umfasst, wobei jeweils ein Untersetzungsgetriebe (14) jeweils einem Seitengetriebe (13) nachgeschaltet ist, jeweils ein Schwungrad (16) jeweils einem Seitengetriebe (13) und jeweils einem Untersetzungsgetriebe (14) zwischengeschaltet ist und jeweils eine schaltbare Kupplungseinrichtung (17) jeweils einem Schwungrad (16) und jeweils einem Untersetzungsgetriebe (14) zwischengeschaltet ist, wobei jedes Untersetzungsgetriebe (14) abtriebsseitig mit der Kurbelwelle (15) verbindbar ist.

15. Quaderballenpresse (1) mit einem Antriebsstrang (3) zum Antreiben von Arbeitsaggregaten (4, 5, 6, 7, 8) der Quaderballenpresse (1), zumindest zum Antrieb eines in einem Presskanal der Quaderballenpresse (1) zwischen Endlagen beweglich angeordneten Presskolbens (7), **dadurch gekennzeichnet, dass** der Antriebsstrang (3) eine Getriebeanordnung (12) nach einem der Ansprüche 1 bis 14 umfasst.

## Claims

1. A gear assembly (12) for driving a baler ram (7) which is movably disposed between end positions in a baling channel of a square baler (1), wherein the gear assembly (12) comprises at least one side gear (13) which can be driven indirectly from a power take-off shaft of an agricultural working machine, in particular a tractor, and at least one reduction gear (14) connected downstream of the at least one side gear (13) which can be connected, on the output side, to a crankshaft (15) on which the baler ram (7) is mounted;
**characterized in that**
at least one flywheel (16) is connected between the at least one side gear (13) and the at least one reduction gear (14) and at least one clutch device (17) which can be shifted is connected between the at least one flywheel (16) and the at least one reduction gear (14).

2. The gear assembly (12) according to claim 1, **characterized in that** the at least one clutch device (17) which can be shifted is positioned directly between the at least one flywheel (16) and a gear input of the at least one reduction gear (14).

3. The gear assembly (12) according to claim 1 or claim 2, **characterized in that** an actuation of the at least one clutch device (17) which can be shifted can be controlled, preferably automatically, by means of a control device and in fact in a manner such that when starting up the square baler (1), the at least one clutch device (17) which can be shifted is in a disengaged state in which the at least one flywheel (16) and the at least one reduction gear (14) are uncoupled from one another, and as soon as the at least one flywheel (16) has reached a nominal rotational speed or a rotational speed which is below the nominal rotational speed, preferably a rotational speed which is up to 70% below the nominal rotational speed, it is in an engaged state in which the at least one flywheel (16) and the at least one reduction gear (14) are operatively connected to one another.

4. The gear assembly (12) according to one of claims 1 to 3, **characterized in that** the at least one clutch device (17) which can be shifted is a hydraulically operable clutch device, preferably a hydraulically operable multi-plate clutch.

5. The gear assembly (12) according to one of claims 1 to 4, **characterized in that** the at least one flywheel (16) forms a component of an output (18) of the at least one side gear (13).

6. The gear assembly (12) according to claim 5, **characterized in that** the at least one flywheel (16) is formed integrally with the output (18) of the at least one side gear (13) or is connected to the output (18) of the at least one side gear (13) in an interlocking, a force-fitting and/or a cohesive manner.

7. The gear assembly (12) according to claim 5 or claim 6, **characterized in that** the output (18) of the at least one side gear (13) is rotatably mounted on a housing (24) of the at least one reduction gear (14).

8. The gear assembly (12) according to one of claims 1 to 7, **characterized in that** the at least one side gear (13) is a traction gear, preferably a V-belt gear.

9. The gear assembly (12) according to one of claims 1 to 8, **characterized in that** the at least one reduction gear (14) is a multi-stage gear, wherein a gear ratio in each gear stage is i > 1.

10. The gear assembly (12) according to one of claims 1 to 9, **characterized in that** the at least one reduction gear (14) is a planetary gear, wherein preferably, the at least one reduction gear (14) is a two-stage planetary gear, wherein the two-stage planetary gear is configured in each of the two gear stages to be driven via a sun gear (20, 26) and to output (18) via a carrier (22, 28) on which planetary gears (21, 27) are mounted, wherein a carrier (28) of the second stage can be connected to the crankshaft (15).

11. The gear assembly (12) according to claim 9, **characterized in that** the at least one reduction gear (14) is a multi-stage spur gear.

12. The gear assembly (12) according to one of claims 1 to 11, **characterized in that** the at least one reduction gear (14) comprises a power splitting system (30) for driving other working units (6, 8) of the square baler, wherein preferably, the power splitting system (30) comprises a multi-stage spur gear.

13. The gear assembly (12) according to claim 12 in combination with claim 10, **characterized in that** a gear input, in particular a toothed wheel forming the gear input, of the power splitting system (30) configured as a multi-stage spur gear, is operatively connected to the carrier (22) of the first gear stage of the reduction gear (14) configured as a two-stage planetary gear.

14. The gear assembly (12) according to one of claims 1 to 13, **characterized in that** the gear assembly (12) comprises two side gears (13), two reduction gears (14), two flywheels (16) and two clutch devices (17) which can be shifted, wherein a respective reduction gear (14) is connected downstream of a respective side gear (13), a respective flywheel (16) is connected between a respective side gear (13) and a respective reduction gear (14), and a respective clutch device (17) which can be shifted is connected between a respective flywheel (16) and a respective reduction gear (14), wherein each reduction gear (14) can be connected to the crankshaft (15) on the output side.

15. A square baler (1) with a drive train (3) for driving working assemblies (4, 5, 6, 7, 8) of the square baler (1), at least for driving a baler ram (7) which is movably disposed between end positions in a baling channel of the square baler (1), **characterized in that** the drive train (3) comprises a gear assembly (12) according to one of claims 1 to 14.

## Revendications

1. Agencement de transmission (12) destiné à entraîner un piston de pressage (7) disposé de façon mobile entre des positions extrêmes dans un canal de pressage d'une presse à balles parallélépipédiques (1), l'agencement de transmission (12) comprenant au moins une transmission latérale (13), pouvant être entraînée indirectement par une prise de force d'un engin agricole, en particulier d'un tracteur, et au moins un mécanisme réducteur (14) qui est monté à la suite de la transmission latérale (13), au nombre d'au moins une, et qui peut être relié côté sortie à un vilebrequin (15) sur lequel est monté le piston de pressage (7),
**caractérisé en ce que**
au moins un volant d'inertie (16) est intercalé entre la transmission latérale (13), au nombre d'au moins une, et le réducteur (14), au nombre d'au moins un, et au moins un dispositif d'accouplement temporaire (17) est intercalé entre le volant d'inertie (16), au nombre d'au moins un, et le réducteur (14), au nombre d'au moins un.

2. Agencement de transmission (12) selon la revendication 1, **caractérisé en ce que** le dispositif d'accouplement temporaire (17), au nombre d'au moins un, est placé directement entre le volant d'inertie (16), au nombre d'au moins un, et une entrée de transmission du réducteur (14), au nombre d'au moins un.

3. Agencement de transmission (12) selon la revendication 1 ou 2, **caractérisé en ce qu'**un actionnement du dispositif d'accouplement temporaire (17), au nombre d'au moins un, peut être commandé de façon automatique au moyen d'un dispositif de commande, de manière à ce que lors d'une mise en service de la presse à balles parallélépipédiques (1), le dispositif d'accouplement temporaire (17), au nombre d'au moins un, se trouve dans un état ouvert dans lequel le volant d'inertie (16), au nombre d'au moins un, et le réducteur (14), au nombre d'au moins un, sont découplés l'un de l'autre, et dès que le volant d'inertie (16), au nombre d'au moins un, a atteint une vitesse de rotation nominale ou une vitesse de rotation inférieure à la vitesse de rotation nominale, de préférence une vitesse de rotation inférieure jusqu'à 70 % à la vitesse normale, se trouve dans un état fermé dans lequel le volant d'inertie (16), au nombre d'au moins un, et le réducteur (14), au nombre d'au moins un sont en liaison fonctionnelle l'un avec l'autre.

4. Agencement de transmission (12) selon l'une des revendications 1 à 3, **caractérisé en ce que** le dispositif d'accouplement temporaire (17), au nombre d'au moins un, est un dispositif d'accouplement à actionnement hydraulique, de préférence un accouplement à disques multiples à actionnement hydraulique.

5. Agencement de transmission (12) selon l'une des revendications 1 à 4, **caractérisé en ce que** le volant d'inertie (16), au nombre d'au moins un, constitue un composant d'une sortie d'entraînement (18) de la transmission latérale (13), au nombre d'au moins une.

6. Agencement de transmission (12) selon la revendication 5, **caractérisé en ce que** le volant d'inertie (16), au nombre d'au moins un, est réalisé d'une seule pièce avec la sortie d'entraînement (18) de la transmission latérale (13), au nombre d'au moins une, ou est relié par complémentarité de formes, par adhérence et/ou par matière à la sortie d'entraînement (18) de la transmission latérale (13), au nombre d'au moins une.

7. Agencement de transmission (12) selon la revendication 5 ou 6, **caractérisé en ce que** la sortie d'entraînement (18) de la transmission latérale (13), au nombre d'au moins une, est montée avec possibilité de rotation sur un carter (24) du réducteur (14), au nombre d'au moins un.

8. Agencement de transmission (12) selon l'une des revendications 1 à 7, **caractérisé en ce que** la transmission latérale (13), au nombre d'au moins une, est un mécanisme à élément de traction, de préférence un mécanisme à courroie trapézoïdale.

9. Agencement de transmission (12) selon l'une des revendications 1 à 8, **caractérisé en ce que** le réducteur (14), au nombre d'au moins un, est un mécanisme à plusieurs étages, dans lequel un rapport de réduction dans chaque étage de transmission est i > 1.

10. Agencement de transmission (12) selon l'une des revendications 1 à 9, **caractérisé en ce que** le réducteur (14), au nombre d'au moins un, est un engrenage planétaire, sachant que, de préférence, le réducteur (14), au nombre d'au moins un, est un engrenage planétaire à deux étages, l'engrenage planétaire à deux étages étant réalisé dans chacun des deux étages de transmission, en vue de l'entraînement via une roue solaire (20, 26) et, en vue de la sortie via une patte (22, 28) sur laquelle sont montés des satellites (21, 27), une patte (28) du deuxième étage pouvant être reliée au vilebrequin (15).

11. Agencement de transmission (12) selon la revendication 9, **caractérisé en ce que** le réducteur (14), au nombre d'au moins un, est un engrenage droit à plusieurs étages.

12. Agencement de transmission (12) selon l'une des revendications 1 à 11, **caractérisé en ce que** le réducteur (14), au nombre d'au moins un, comprend un élément de répartition de puissance (30) destiné à l'entraînement d'unités de travail (6, 8) supplémentaires de la presse à balles parallélépipédiques, l'élément de répartition de puissance (30) comportant de préférence un engrenage droit à plusieurs étages.

13. Agencement de transmission (12) selon la revendication 12 en combinaison avec la revendication 10, **caractérisé en ce qu'**une entrée de transmission, en particulier une roue dentée constituant l'entrée de transmission, de l'élément de répartition de puissance (30) réalisé sous forme d'engrenage droit à plusieurs étages est reliée par une liaison fonctionnelle à la patte (22) du premier étage de transmission du réducteur (14) réalisé comme engrenage planétaire à deux étages.

14. Agencement de transmission (12) selon l'une des revendications 1 à 13, **caractérisé en ce que** l'agencement de transmission (12) comprend deux transmissions latérales (13), deux réducteurs (14), deux volants d'inertie (16) et deux dispositifs d'accouplement temporaire (17), sachant qu'un réducteur (14) est placé respectivement après une transmission latérale (13), un volant d'inertie (16) est intercalé respectivement entre une transmission latérale (13) et respectivement un réducteur (14), et un dispositif d'accouplement temporaire (17) est intercalé respectivement entre un volant d'inertie (16) et respectivement un réducteur (14), chaque réducteur (14) pouvant être relié côté sortie au vilebrequin (15).

15. Presse à balles parallélépipédiques (1) comprenant une chaîne de transmission (3) destinée à l'entraînement d'unités de travail (4, 5, 6, 7, 8) de la presse à balles parallélépipédiques (1), au moins pour l'entraînement d'un piston de pressage (7) disposé de façon mobile entre des positions extrêmes dans un canal de pressage de la presse à balles parallélépipédiques (1), **caractérisée en ce que** la chaîne de transmission (3) comprend un agencement de transmission (12) selon l'une des revendications 1 à 14.
